# EUROPEAN PATENT APPLICATION

(11) **EP 2 618 545 A1**
(43) Date of publication of application: **24.07.2013**
(21) Application number: 11825045.5
(22) Date of filing: 07.09.2011
(51) Int. Cl.: H04M 1/00

(54) **MOBILE TERMINAL DEVICE**

(30) Priority: 14.09.2010 JP 2010205499
(71) Applicant: NEC CASIO Mobile Communications, Ltd., Kawasaki-shi Kanagawa 211-8666 (JP)
(72) Inventor: KATSUKI, Yukiko, Kawasaki-shi Kanagawa 211-8666 (JP)
(74) Representative: Vossius & Partner
(86) International application number: PCT/JP2011/070358
(87) International publication number: WO 2012/036039

(57) **Abstract**

When a mail sender and receiver (110) sends an electronic mail with image data stored in an image data storage area (142) attached thereto, an image management data storage area (143) stores image data identifying information for identifying the image data attached to the sent electronic mail and a returned message included in an electronic mail which is returned in reply to the sent electronic mail, in association with each other.

## Description

### Technical field:

The present invention relates to a mobile terminal device, an image data managing method, and a program for managing image data.

### Background art:

When a printed photograph is applied to an album and stored on the album, the applied photograph may be accompanied by a handwritten comment or decorated by a seal.

In recent years, many mobile terminals have an image capturing function such as a camera or the like. The user of such a mobile terminal may want to save not only a list of images captured by the camera or the like, but also comments made about the images at the time the images were captured. It is the general practice for the user to edit captured images and leave comments added that the user has added to the captured images.

When a person has sent electronic mail with an image attached for the recipient to see, the sender can obtain a comment made about the image by the recipient from an electronic mail or a voice call which the recipient has made in return. However, such a comment is one-shot only because there is no effective means for managing the comment together with the image.

On mobile devices, it has been customary to associate electronic mails, a call history, and images with each other according to schedule and to show them in an application.

The above process manages the various data independently of each other, and the information other than the images is not directly associated with the images. When the data are taken out of the mobile devices, or the images are to be printed, therefore, there is no means available for printing the information together with the images, and for saving the information together with the images.

There has been devised an information processing apparatus which is capable of easily producing an electronic album wherein image data and comments are associated with each other by a plurality of participants (see, for example, Patent document 1). According to the process carried out by the information processing apparatus, a dedicated server is prepared that is accessible by each of the participants themselves.

### Prior technical documents:

### Patent documents:

Patent document 1: JP2007-304970A

### Summary of the invention:

### Problems to be solved by the invention:

As disclosed in Patent document 1, there have been provided many processes which use a dedicated server to manage image data. However, it is not easy for elderly users to access the server by themselves, to have them authenticated, and to save information such as comments or the like.

The disclosed technology is also problematic in that an expense is required to operate a server in order to maintain image data.

It is an object of the present invention to provide a mobile terminal device, an image data managing method, and a program which are capable of solving the above problems.

### Means for solving the problems:

A mobile terminal device according to the present invention includes:
an image data storage area which stores acquired image data;
a mail sender and receiver which sends and receives electronic mails; and
an image management data storage area which, when the mail sender and receiver sends an electronic mail with the image data stored in the image data storage area attached thereto, stores image data identifying information for identifying the image data attached to the sent electronic mail and a returned message included in an electronic mail which is returned in reply to the sent electronic mail, in association with each other.

According to the present invention, there is also provided an image data managing method for managing acquired image data, including:
storing the image data;
sending an electronic mail with the image data attached thereto;
receiving an electronic mail which is returned in reply to the sent electronic mail; and
managing image data identifying information for identifying the image data attached to the sent electronic mail and the returned message included in the received electronic mail, in association with each other.

According to the present invention, there is further provided a program for enabling a computer to perform:
a procedure of storing the image data;
a procedure of sending an electronic mail with the image data attached thereto;
a procedure of receiving an electronic mail which is returned in reply to the sent electronic mail; and
a procedure of managing image data identifying information for identifying the image data attached to the sent electronic mail and the returned message included in the received electronic mail, in association with each other.

### Advantages of the invention:

According to the present invention, as described above, image and a message for the image data can easily be managed in association with each other.

Fig. 1 is a block diagram of a mobile terminal device according to an exemplary embodiment of the present invention;
Fig. 2 is a diagram showing an example of phonebook data stored in a phonebook data storage area shown in Fig. 1;
Fig. 3 is a diagram showing an example of image data stored in an image data storage area shown in Fig. 1;
Fig. 4 is a diagram showing an example of management data stored in an image management data storage area shown in Fig. 1;
Fig. 5 is a diagram showing an example of association between a returned message file name shown in Fig. 4 and a returned message;
Fig. 6 is a flowchart of an example of a processing sequence of an image data managing method according to the exemplary embodiment, for managing image data and sent data in association with each other;
Fig. 7 is a flowchart of an example of a processing sequence of the image data managing method according to the exemplary embodiment, for managing returned data associated with the image data and the sent data which are associated with each other;
Fig. 8 is a view showing an example of combined image data generated by an image data editor shown in Fig. 1;
Fig. 9 is a view showing another example of combined image data generated by the image data editor shown in Fig. 1;
Fig. 10 is a flowchart of an example of a processing sequence of the image data managing method according to the exemplary embodiment, for managing image data, sent data, and returned data in association with each other;
Fig. 11 is a view showing an example of a range selection screen displayed on a display unit shown in Fig. 1;
Fig. 12 is a view showing an example of returned electronic mail displayed on the display unit shown in Fig. 1;
Fig. 13 is a diagram showing an example of registered text data extracted from a returned message shown in Fig. 12; and
Fig. 14 is a view showing an example of combined image data generated from an association shown in Fig. 13.

### Mode for carrying out the invention:

An exemplary embodiment of the present invention will be described below with reference to the drawings.

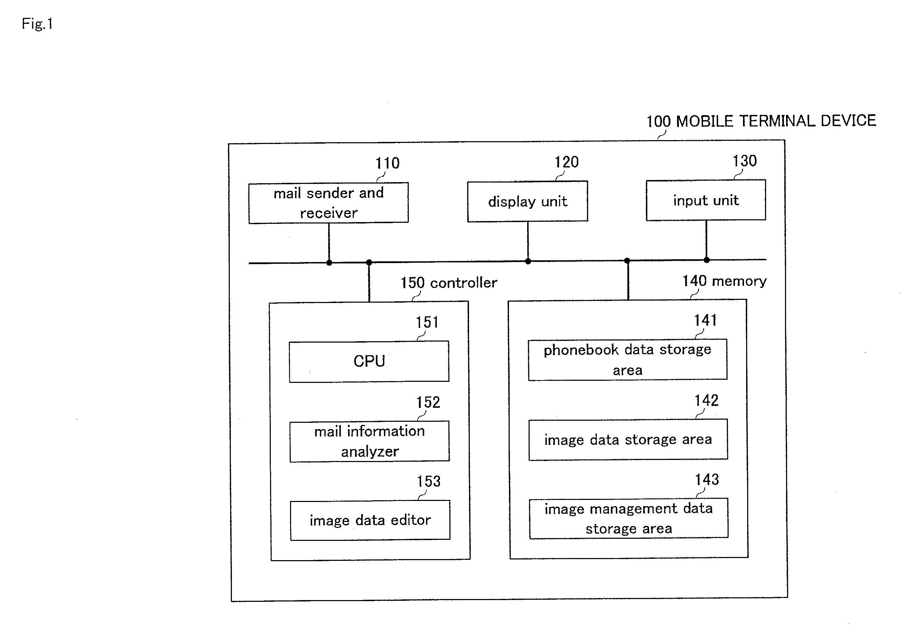

Fig. 1 is a block diagram of a mobile terminal device according to an exemplary embodiment of the present invention.

As shown in Fig. 1, the mobile terminal device, denoted by 100, according to the present exemplary embodiment includes mail sender and receiver 110, display unit 120, input unit 130, memory 140, and controller 150.

Memory 140 includes phonebook data storage area 141, image data storage area 142, and image management data storage area 143.

Controller 150 includes CPU 151, mail information analyzer 152, and image data editor 153.

Fig. 1 only shows those components that make up mobile terminal device 100 which relate to the present invention.

Mail sender and receiver 110 sends and receives electronic mails. For example, mail sender and receiver 110 sends an electronic mail with image data attached thereto and receives an electronic mail returned in reply to the sent electronic mail.

Display unit 120 is a display for displaying images and information such as electronic mail.

Input unit 130 comprises keys or the like that are operated by the operator of mobile terminal device 100 to enter information from outside of mobile terminal device 100.

Phonebook data storage area 141 stores general phonebook data. The phonebook data stored in phonebook data storage area 141 are used in association with data stored in image management data storage area 143.

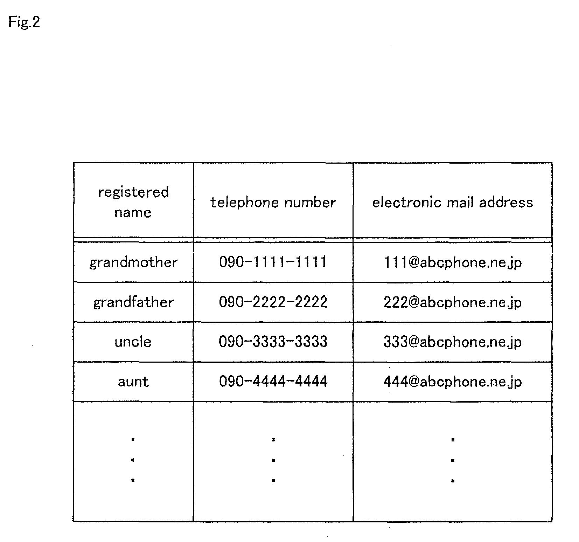

Fig. 2 is a diagram showing an example of phonebook data stored in phonebook data storage area 141 shown in Fig. 1.

As shown in Fig. 2, phonebook data storage area 141 stores therein phonebook data representing registered names, telephone numbers, and electronic mail addresses that are associated with each other.

For example, as shown in Fig. 2, a registered name "grandmother", a telephone number "090-1111-1111", and an electronic mail address "111@abcphone.ne.jp" are stored in association with each other. The association means that the telephone number of the person whose registered name is "grandmother" is "090-1111-1111" and the electronic mail address thereof is "111@abcphone.ne.jp". A registered name "grandfather", a telephone number "090-2222-2222", and an electronic mail address "222@abcphone.ne.jp" are stored in association with each other. The association means that the telephone number of the person whose registered name is "grandfather" is "090-2222-2222" and the electronic mail address thereof is "222@abcphone.ne.jp". A registered name "uncle", a telephone number "090-3333-3333", and an electronic mail address "333@abcphone.ne.jp" are stored in association with each other. The association means that the telephone number of the person whose registered name is "uncle" is "090-3333-3333" and the electronic mail address thereof is "333@abcphone.ne.jp". A registered name "aunt", a telephone number "090-4444-4444", and an electronic mail address "444@abcphone.ne.jp" are stored in association with each other. The association means that the telephone number of the person whose registered name is "aunt" is "090-4444-4444" and the electronic mail address thereof is "444@abcphone.ne.jp".

As with general phonebook data, the above items of information may also be associated with photographs (images) of the faces of those people and their addresses, etc.

Image data storage area 142 stores acquired image data. These image data are captured by an image capturing function such as a camera or the like included in mobile terminal device 100 or are acquired from the Internet or the like.

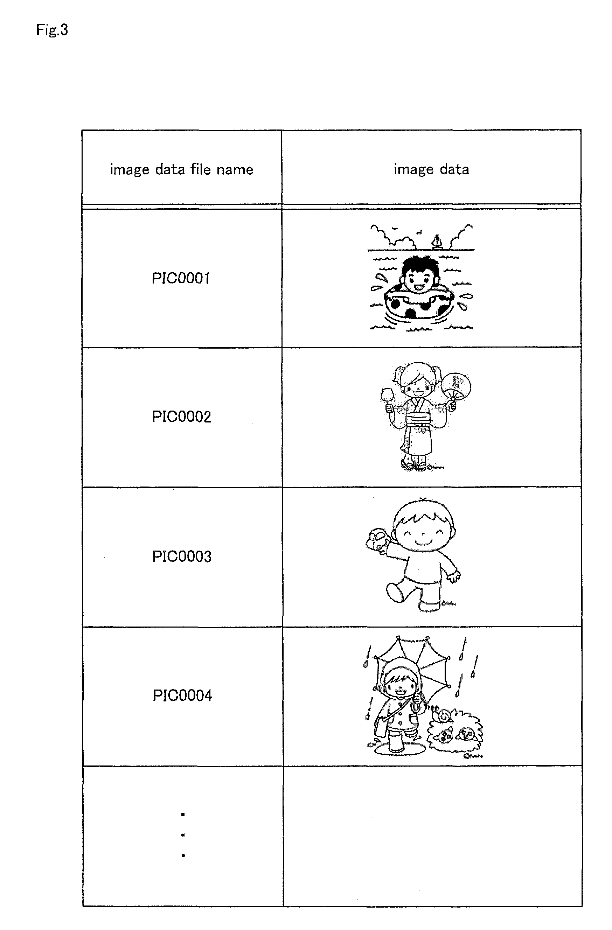

Fig. 3 is a diagram showing an example of image data stored in image data storage area 142 shown in Fig. 1.

As shown in Fig. 3, image data storage area 142 shown in Fig. 1 stores image data and image data file names, which serve as image data identifying information for identifying the image data, in association with each other.

Image management data storage area 143 stores image data identifying information for identifying image data attached to sent electronic mails and returned messages described in electronic mail returned in reply to the sent electronic mail, in association with each other, as management data.

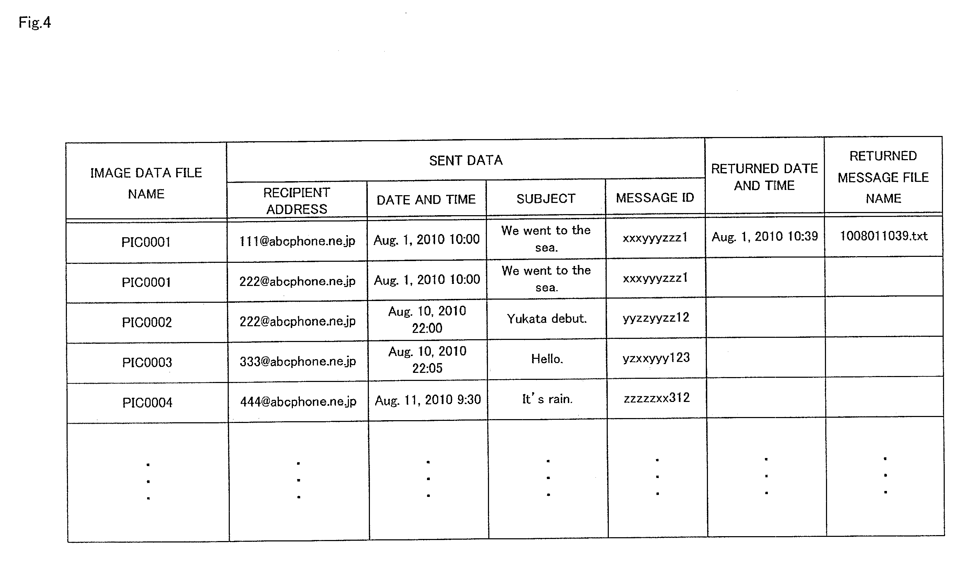

Fig. 4 is a diagram showing an example of management data stored in image management data storage area 143 shown in Fig. 1.

As shown in Fig. 4, image management data storage area 143 shown in Fig. 1 stores image data file names, sent data, returned dates and times, and returned message file names in association with each other, as management data.

An image data file name represents image data identifying information for identifying image data attached to a sent electronic mail.

Sent data represents the content of a sent electronic mail. The sent data are made up of a recipient address, a date and time, a subject, and a message ID.

The recipient address is the electronic mail address of the recipient to which the electronic mail was sent.

The date and time are a date and time on which the electronic mail was sent.

The subject represents information inserted in the field of "Subject" of the sent electronic mail.

The message ID is an ID for judging whether the received electronic mail is an electronic mail returned in reply to the sent electronic mail, using the In-Reply-To field of the received electronic mail.

The returned date and time are a date and time on which the electronic mail returned in reply to the sent electronic mail was received.

The returned message file name is the file name of a returned message as the body of the returned electronic mail. An actual returned message is stored in another area, and can be extracted by the returned message file name.

A process of storing the association of these date will be described later.

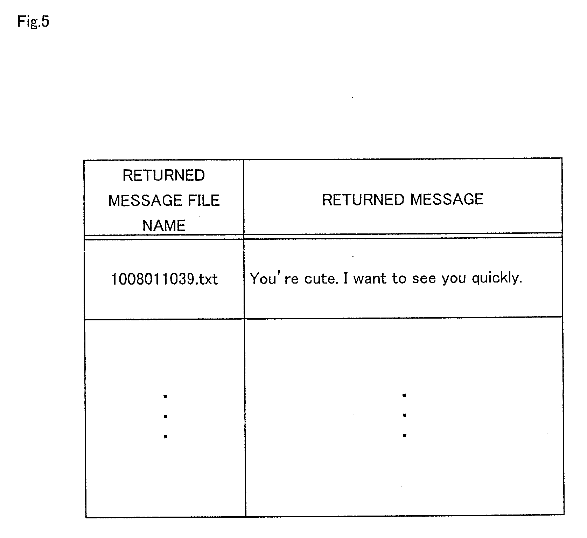

Fig. 5 is a diagram showing an example of association between the returned message file name shown in Fig. 4 and a returned message.

As shown in Fig. 5, the returned message file name shown in Fig. 4 and an actual returned message are associated with each other. The association may be used to acquire the actual returned message from the returned message file name shown in Fig. 4.

CPU 151, which comprises a general CPU (Central Processing Unit), controls mobile terminal device 100 in its entirety.

Mail information analyzer 152 analyzes additional information of an electronic mail sent or received by mail sender and receiver 110, and registers necessary information in image management data storage area 143.

Image data editor 153 automatically processes and edits image data. Specifically, image data editor 153 generates combined image data representing a combination of image data stored in image data storage area 142 and a returned message acquired from a returned message file name that is stored in association with the image data file name of the image data in image management data storage area 143. Image data editor 153 stores (registers) the generated combined image data in image data storage area 142.

Image data editor 153 may store predetermined keywords and decoration images depending on the keywords in association with each other, and may generate combined image data using a decoration image depending on a keyword included in a returned message.

An image data managing method according to the present exemplary embodiment will be described below. First, as regards the image data managing method according to the exemplary embodiment, a process for managing image data and sent data in association with each other will be described below.

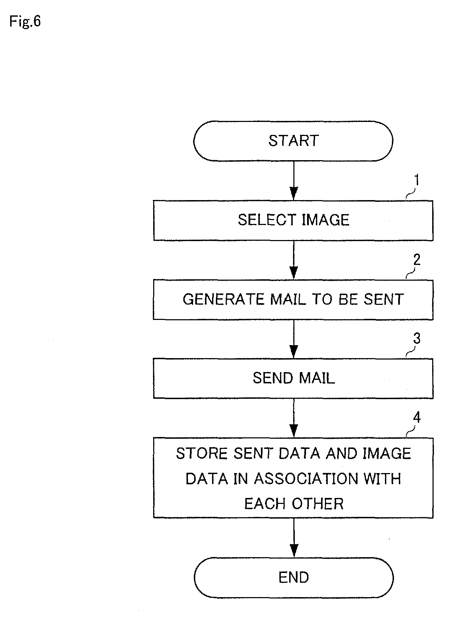

Fig. 6 is a flowchart of an example of a processing sequence of the image data managing method according to the exemplary embodiment, for managing image data and sent data in association with each other.

When the user who wants to send an electronic mail from mobile terminal device 100 enters a prescribed action into input unit 130, desired image data are selected in step 1.

Similarly, the user performs a prescribed action on input unit 130 to generate an electronic mail to be sent in step 2. Specifically, the user enters (generates) the subject and message of an electronic mail and attaches the image data selected in step 1.

Thereafter, the user enters a prescribed input into input unit 130 to send the generated electronic mail from mail sender and receiver 110 in step 3. Information representing the sent data and the image data that are associated with each other is then stored in image management data storage area 143 in step 4. Specifically, the image data file name of the image data attached to the electronic mail and the sent data as a mail header of the sent electronic mail {the recipient address (the field following "To" of the sent electronic mail), the date and time (the field following "Date" of the sent electronic mail), the subject (the field following "Subject" of the sent electronic mail), and the message ID shown in Fig. 4} are stored in association with each other, as shown in Fig. 4.

As regards the image data managing method according to the exemplary embodiment, a process for managing image data and sent data in association with the image data and the sent data that are associated with each other will be described below.

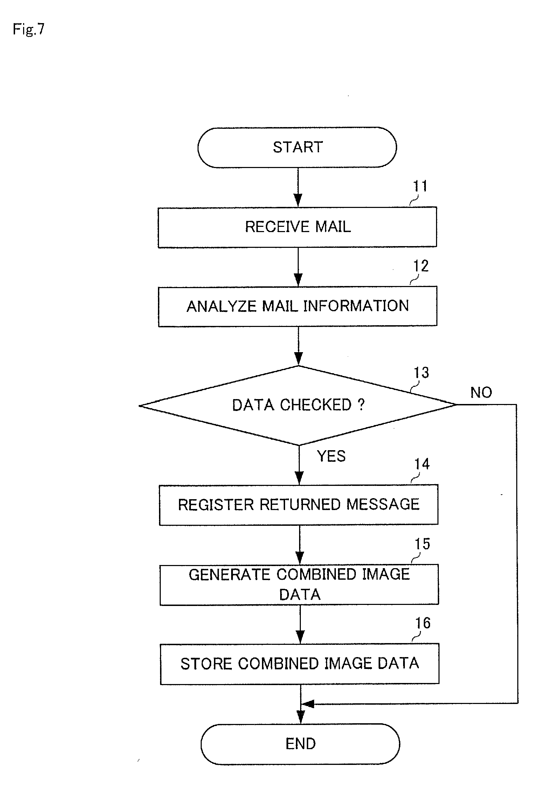

Fig. 7 is a flowchart of an example of a processing sequence of the image data managing method according to the exemplary embodiment, for managing returned data associated with the image data and the sent data which are associated with each other.

After the electronic mail is sent, an electronic mail is received by mail sender and receiver 110 in step 11. The received electronic mail is then analyzed by mail information analyzer 152 in step 12. According to a specific information analyzing process, mail information analyzer 152 confirms (extracts) mail header information including a subject (Subject:), a reply to (In-Reply-To:) field, etc. of the received electronic mail.

In step 13, CPU 151 or main information analyzer 152 checks the mail header information against the management data stored in image management data storage area 143 to judge whether or not the received electronic mail is an electronic mail returned in reply to the electronic mail sent with the image data attached.

If the received electronic mail has an In-Reply-To field that indicates which electronic mail is returned in reply to the sent mail, then the received electronic mail can simply be checked by the message ID that follows "In-Reply-To:" because, as shown in Fig. 4, since the message ID is stored as the sent data, it may be judged whether or not the message ID that follows "In-Reply-To:" is in agreement with the message ID stored as the sent data.

If the received electronic mail has no In-Reply-To field, then CPU 151 or main information analyzer 152 checks the received electronic mail based on information such as the subject, the sender, or the date and time. For example, if the subject of the sent electronic mail is "I went to the sea" and the subject of the received electronic mail is "Re: I went to the sea", then the received electronic mail is judged as an electronic mail that was returned in reply to the sent electronic mail. If the period of time from the date and time of the sent electronic mail to the date and time of the received electronic mail falls in a predetermined time range, then since the sent electronic mail and the received electronic mail are judged as having a high possibility that they are related to each other, the period of time referred to above may also be used as a material on which to judge the received electronic mail. Furthermore, if the sender of the received electronic mail is the recipient of the sent electronic mail, then the received electronic mail may be judged as an electronic mail returned in reply to the sent electronic mail.

If the received electronic mail is not judged as an electronic mail returned in reply to the sent electronic mail with the image data attached based on the above check, then the received electronic mail is processed as ordinary received electronic mail.

If the received electronic mail is judged as an electronic mail returned in reply to the sent electronic mail with the image data attached based on the above check, then the date and time at which the returned electronic mail is received by mail sender and receiver 110 and the returned message as the body of the returned electronic mail are registered (stored) in association with the corresponding sent data in image management data storage area 143 in step 14.

At this time, as shown in Figs. 4 and 5, the returned message itself may be retained as a text file and the file name thereof may be associated with the sent data.

If image data are attached to the returned electronic mail, then the image data may also be stored in association with the data and the returned message. The image data themselves may be stored in image data storage area 142 and the file name thereof may be stored in association with the sent data in image management data storage area 143.

The image data stored in image data storage area 142 and the returned message acquired from the returned message file name that is stored in association with the image data file name of the image data in image management data storage area 143 are combined into combined image data by image data editor 153 in step 15. At this time, the date and time at which the returned electronic mail is received by mail sender and receiver 110 and the name of the sender of the returned electronic mail (the registered name stored in phonebook data storage area 141) may also be combined with the image data and the returned message.

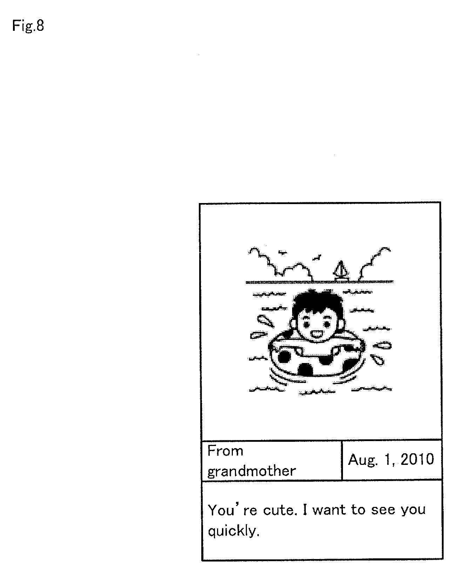

Fig. 8 is a view showing an example of combined image data generated by image data editor 13 shown in Fig. 1. Specifically, Fig. 8 shows an example of combined image data generated using image data file name "PIC0001" of the management data shown in Fig. 4.

As shown in Fig. 8, the image data having file name "PIC0001", the message "You're cute. I want to see you quickly." Described in returned message file "1008011039.txt", "grandmother" having electronic mail address "111@abcphone.ne.jp" of the returned electronic mail, and only date "2010.8.1" of the returned (received) date and time are combined with each other.

The combined image data thus generated are stored as image data different from the original image data in image data storage area 142 in step 16. At this time, an image data file name for identifying the combined image data is assigned thereto and stored. The image data file name may be associated with the management data.

The combined image data stored in image data storage area 142 may be displayed on display unit 120 at the time, or may be displayed on display unit 120 at a given timing when there is an external input. At this time, the combined image data may be converted into thumbnail image data for display in a thumbnail image list.

The combined image data stored in image data storage area 142 may be read and sent to an external device or written in an external storage medium in response to an external input action.

Image data editor 153 may store given keywords and decoration images depending on the keywords in association with each other, and may generate combined image data using a decoration image depending on a keyword included in a returned message. Image data editor 153 may have a function, based on an emotion engine, to extract an image related to the image data depending on the keyword included in the returned message, and to register only the extracted image. With the emotion engine, image data editor 153 can extract an emotion implied by the returned message, and automatically apply a decoration depending on the extracted emotion in generating combined image data for the user's convenience.

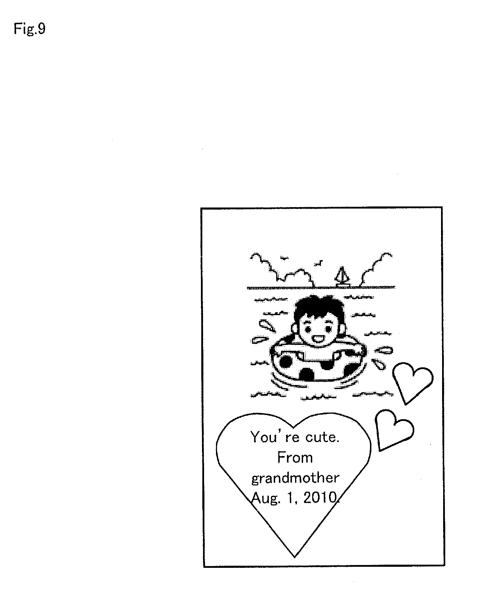

Fig. 9 is a view showing another example of combined image data generated by image data editor 153 shown in Fig. 1.

Unlike the combined image data shown in Fig. 8, the combined image data shown in Fig. 9 include a decoration (heart-shaped mark) depending on a keyword "You're cute" that has been extracted.

Settings may be made available as regards whether or not a returned massage is to be combined with image data and as regards a range in which a returned message is to be combined with image data.

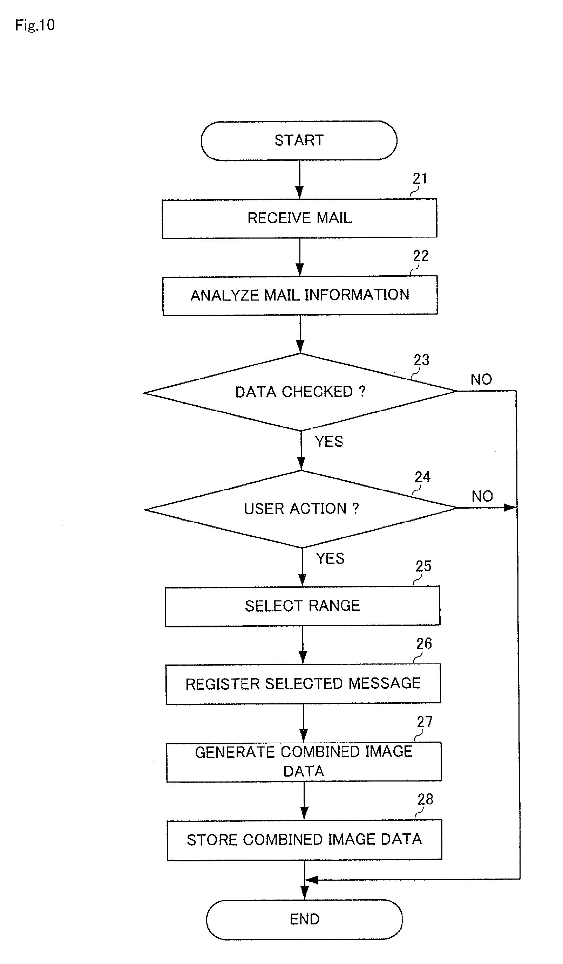

Fig. 10 is a flowchart of an example of a processing sequence of the image data managing method according to the exemplary embodiment, for managing image data, sent data, and returned data in association with each other.

After the electronic mail is sent, an electronic mail is received by mail sender and receiver 110 in step 21. The received electronic mail is then analyzed by mail information analyzer 152 in step 22. A specific information analyzing process for analyzing the received electronic mail is the same as the information analyzing process described according the flowchart shown in Fig. 7.

In step 23, CPU 151 or main information analyzer 152 checks the mail header information against the management data stored in image management data storage area 143 to judge whether or not the received electronic mail is an electronic mail returned in reply to the electronic mail sent with the image data attached. A specific process for judging the received electronic mail is the same as the information analyzing process described according the flowchart shown in Fig. 7.

If the received electronic mail is not judged as an electronic mail returned in reply to the sent electronic mail with the image data attached based on the above check, then the received electronic mail is processed as an ordinary received electronic mail.

If the received electronic mail is judged as an electronic mail returned in reply to the sent electronic mail with the image data attached based on the above check, then a range selecting screen for selecting data that is to be registered in association with the image data and that is data of the returned electronic mail is displayed on display unit 120.

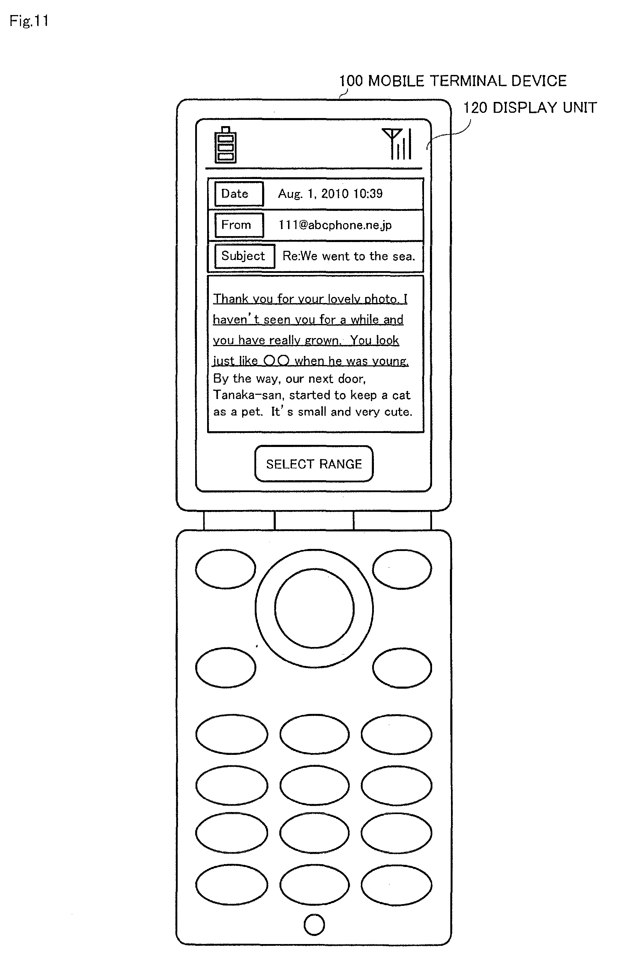

Fig. 11 is a view showing an example of a range selection screen displayed on display unit 120 shown in Fig. 1.

As shown in Fig. 11, a received electronic mail is displayed in a general format so that a desired range of a message, as the body of the received electronic mail, can be set. The user of mobile terminal device 100 enters a prescribed action into input unit 130 to select the range, shown underlined in Fig. 11, and selects a "RANGE SELECTION" key to decide on the selected range.

If the user does not take any (input) action on the displayed range selection screen ("NO" in step 24), then the received electronic mail is processed as an ordinary received electronic mail.

If the user takes a given action on the displayed range selection screen ("YES" in step 24), then a range of the displayed returned message, based on the action that was taken, is selected in step 25.

A message (hereinafter referred to as "selected message"), included in the selected range, of the returned message, and the date and time at which the returned electronic mail is received by mail sender and receiver 110 are registered (stored) in association with the corresponding sent data in image management data storage area 142 in step 26.

At this time, in the same manner as described with reference to the flowchart shown in Fig. 7, the selected message itself may be retained as a text file and the file name thereof may be associated with the sent data.

The image data stored in image data storage area 142 and the selected message acquired from the file name that is stored in association with the image data file name of the image data in image management data storage area 143 are combined into combined image data by image data editor 153 in step 27. At this time, the date and time at which the returned electronic mail is received by mail sender and receiver 110 and the name of the sender of the returned electronic mail may also be combined with the image data and the selected message.

The combined image data thus generated are stored as image data different from the original image data in image data storage area 142 in step S28. At this time, an image data file name for identifying the combined image data is assigned thereto and stored. The image data file name may be associated with the management data.

The above process allows only information suitable for association with the image data to be registered even if the recipient of the sent electronic mail returns an electronic mail without knowing that the returned message will be used in association with the image data.

The returned message, which is the body of the returned electronic mail, may be analyzed for a keyword, and the registered name in the phonebook data stored in phonebook data storage area 141 and the preset keyword may be extracted. Then, only data selected based on the extracted registered name and keyword may be stored in association with the image data identifying information.

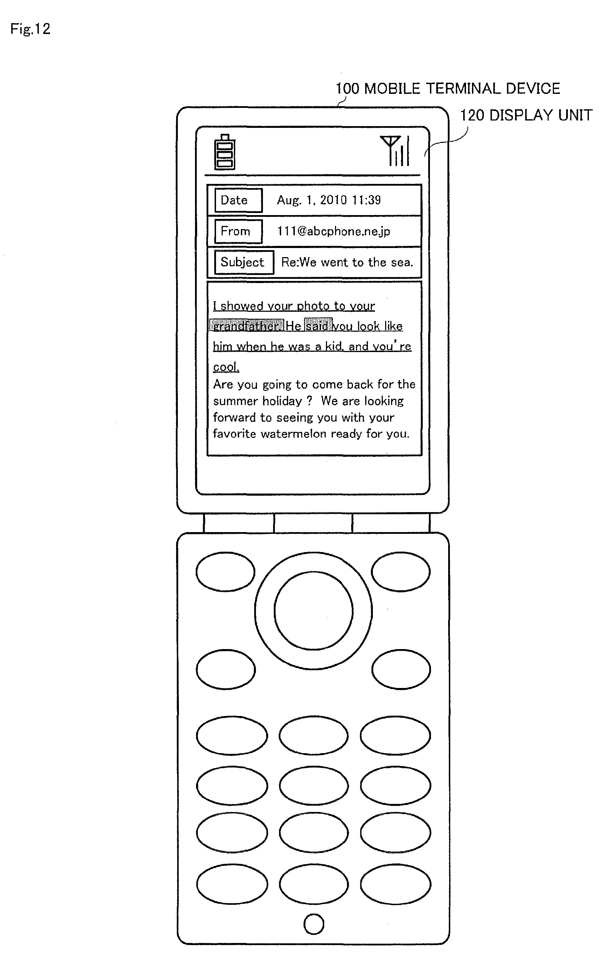

Fig. 12 is a view showing an example of returned electronic mail displayed on display unit 120 shown in Fig. 1.

As shown in Fig. 12, the returned message of the returned electronic mail is displayed in its entirety, and analyzed for a keyword. The keyword "grandfather" registered in the phonebook data and a preset phrase "has said" are detected. A message between the keyword "grandfather" and the phrase "has said" is judged as words from the "grandfather", and may be extracted as text data and registered in image management data storage area 143.

When the text data and the image data are registered in association with each other, the image data registered in phonebook data storage area 141 may also be registered in association therewith.

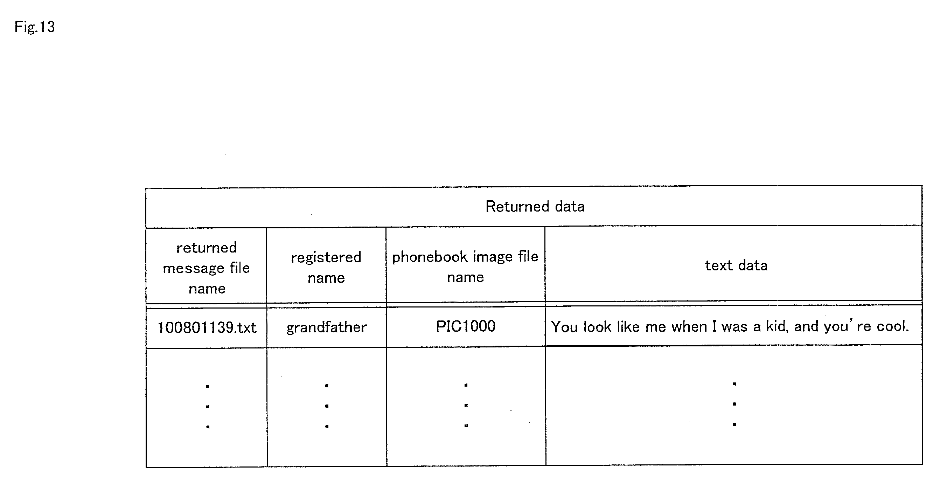

Fig. 13 is a diagram showing an example of registered text data extracted from the returned message shown in Fig. 12.

As shown in Fig. 13, the returned message file name, "grandfather" judged as the registered name as speaking the extracted words, the phonebook image file name of "grandfather" registered in phonebook data storage area 141, and the extracted text data area stored in association with each other.

Combined image data are generated according to the above association.

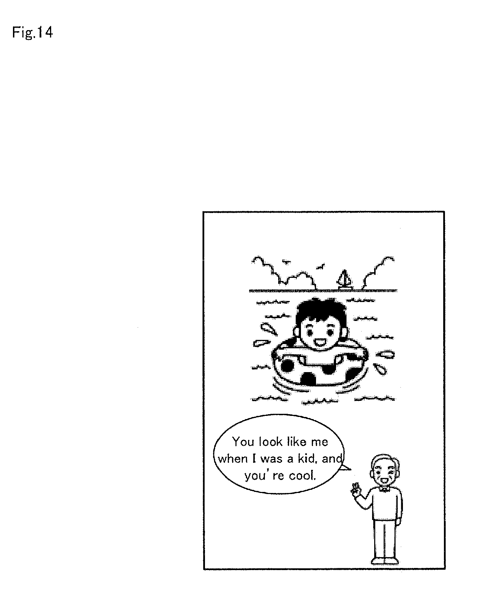

Fig. 14 is a view showing an example of combined image data generated from the association shown in Fig. 13.

As shown in Fig. 14, the image data of "grandfather" registered in phonebook data storage area 141 may be combined with the keyword extracted as the words of "grandfather" as shown in Fig. 12.

The above process allows only information suitable for management even if the recipient of the sent electronic mail returns an electronic mail without knowing that the returned message will be used in association with the image data.

Furthermore, the mobile terminal device may have a function to leave records such as the date and time on which image data attached to an electronic mail are sent in phonebook data storage area 141, and issue an alarm when a certain period has elapsed.

If the mobile terminal device has an album that manages faces (individuals) using a face recognition function, then the mobile terminal device may have a function to automatically generate an electronic mail with the latest image data in the album attached and prompt the user to send the generated electronic mail. The mobile terminal device with this function makes it possible for the user not to forget to send image data if there is a recipient to whom the user wants to periodically send the image data.

As described above, the present invention offers the following advantages:

The first advantage is that it is possible to associate image data and a returned message of an electronic mail that is returned in reply to an electronic mail that is sent with the image data attached thereto, without the user realizing it. This is because when the electronic mail with the image data attached thereto is sent, data about the sending of the electronic mail are automatically registered, and when an electronic mail is received, a check is automatically performed to determine whether or not the received electronic mail is an electronic mail that has been returned in reply to the sent electronic mail.

The second advantage is that the user who has received the electronic mail with the image data attached (the user who has returned the message in reply to the image data) can add a comment to the image data without realizing it by following the standard procedure for returning the electronic mail.

According to the third advantage, text data associated with the image data can automatically be combined and displayed.

According to the fourth advantage, since the combined data are saved as another image data file, when the data are output from mobile terminal device 100 to a personal computer or the like, the image can be saved as is and printed.

According to the present invention, as described above, without any special management server being used, the functions of mobile terminal device 100 make it possible to leave the information together when the data are output from mobile terminal device 100 or are printed, by managing the message returned in reply to the electronic mail in direct association with the image data.

The processes that are carried out by the components of mobile terminal device 100 may be performed by application-specific logic circuits. Alternatively, a computer program (hereinafter referred to as "program") that is descriptive of the processing sequences may be recorded in a recording medium that can be read by mobile terminal device 100, and may be read and executed by mobile terminal device 100. The recording medium that can be read by mobile terminal device 100 may be a removable recording medium such as a floppy (registered trademark) disk, a magnetooptical disk, a DVD, a CD, or the like, or a memory, a HDD, or the like such as memory 140, a ROM, RAM, or the like in mobile terminal device 100. The program recorded in the recording medium is read by CPU 151 of mobile terminal device 100, and performs the same processes as those described above under the control of CPU 151. CPU 151 operates as a computer that executes the program read from the recording medium in which the program is recorded.

Although the present invention has been described with respect to the exemplary embodiments, the present invention is not limited to the above exemplary embodiments. Various changes that can be understood by those skilled in the art may be made to the configurations and details of the present invention within the scope of the present invention.

This application is based upon and claims the benefit of priority from Japanese Patent Application No. 2010-205499 filed on September 14, 2010, the entire disclosure of which is incorporated herein by reference.

## Claims

1. A mobile terminal device comprising:
an image data storage area which stores acquired image data;
a mail sender and receiver which sends and receives electronic mails; and
an image management data storage area which, when said mail sender and receiver send an electronic mail with the image data stored in said image data storage area attached thereto, stores image data identifying information for identifying the image data attached to the sent electronic mail and a returned message included in an electronic mail which is returned in reply to the sent electronic mail, in association with each other.

2. The mobile terminal device according to claim 1, further comprising:
an image data editor which generates combined image data representing a combination of said image data stored in said image data storage area and said returned message stored in combination with the image data identifying information for identifying said image data in said image management data storage area, and stores said combined image data in said image data storage area.

3. The mobile terminal device according to claim 2, wherein said image data editor stores predetermined keywords and decoration images depending on the keywords in association with each other, and generates said combined image data using a decoration image depending on a keyword which is included in said returned message.

4. The mobile terminal device according to claim 1, wherein said image data management storage area stores only a range of said returned message which is selected by an external action, in association with said image data identifying information.

5. The mobile terminal device according to claim 1, further comprising:
a phonebook data storage area for storing phonebook data;
wherein said image management data storage area stores only a portion of said returned message which is selected based on a registered name stored in said phonebook data storage area and a preset keyword, in association with said image data identifying information.

6. An image data managing method for managing acquired image data, comprising:
storing said image data;
sending an electronic mail with said image data attached thereto;
receiving an electronic mail which is returned in reply to the sent electronic mail; and
managing image data identifying information for identifying the image data attached to the sent electronic mail and a returned message included in the received electronic mail, in association with each other.

7. A program for enabling a computer to perform:
a procedure of storing said image data;
a procedure of sending an electronic mail with said image data attached thereto;
a procedure of receiving an electronic mail which is returned in reply to the sent electronic mail; and
a procedure of managing image data identifying information for identifying the image data attached to the sent electronic mail and a returned message included in the received electronic mail, in association with each other.
